# EUROPEAN PATENT SPECIFICATION

(11) **EP 0 653 577 B1**
(45) Date of publication and mention of the grant of the patent: **26.08.1998**
(21) Application number: 94202967.9
(22) Date of filing: 13.10.1994
(51) Int. Cl.: F16F 9/32

(54) **Hydraulic damper**
Hydraulischer Stossdämpfer
Amortisseur hydraulique

(30) Priority: 09.11.1993 GB 9323047
(43) Date of publication of application: 17.05.1995
(73) Proprietor: Delphi France Automotive Systems, 92257 La Garenne-Colombes (FR); DELPHI AUTOMOTIVE SYSTEMS ESPANA SA, Cadiz (ES)
(72) Inventor: Fulks, Gary Chris, West Carrolton, Ohio 45449 (US); Barbosa, Manuel Tornell, Cadiz (ES); Jones, Nicholas, F-60260 La Morlaye (FR); Garcia, Miquel Candela, Chiclana, Cadiz (ES); Jimenez, Francisco Javier Sanchez, Cadiz (ES); Gorostidi,Jose Ignacio Membrillera, Cadiz (ES); Arjona,Antonio Perez De La Lastra, Cadiz (ES)
(74) Representative: Denton, Michael John

(56) References cited:
- DE-A- 848 457
- DE-U- 1 931 028
- FR-A- 2 437 310
- FR-A- 2 558 230
- GB-A- 1 356 261
- GB-A- 2 093 157
- GB-A- 2 187 532
- PATENT ABSTRACTS OF JAPAN vol. 16, no. 452 (M-1313) 21 September 1992 & JP-A-04 158 946 (ATSUGI UNISIA) 2 June 1992
- PATENT ABSTRACTS OF JAPAN vol. 17, no. 604 (M-1506) 8 November 1993 & JP-A-05 180 256 (YAMAKAWA IND CO) 20 July 1993

## Description

This invention relates to a method of forming a hydraulic damper. By hydraulic damper is meant a suspension strut or shock absorber.

A hydraulic damper for use in the suspension system of a motor vehicle typically comprises a tube; a piston sealably slidably mounted in the tube and attached to a piston rod, the piston separating a compression chamber from a rebound chamber within the tube; a compression stroke valve mounted on the piston which allows fluid flow from the compression chamber to the rebound chamber; and a rebound stroke valve mounted on the piston which allows fluid flow from the rebound chamber to the compression chamber. The piston rod extends out of the tube at one end thereof, and is sealably slidably mounted in that one end. Such hydraulic dampers either comprise an inner tube and an outer tube (sometimes referred to as a twin tube damper) in which the piston sealably slides in the inner tube, or comprise a single tube (sometimes referred to as a monotube damper).

It is usual practice to form the or each tube of a hydraulic damper by rolling a sheet of steel and welding together the adjacent longitudinal edges. External parts, such as the spring seat and the mounting bracket or steering knuckle, which are also formed from steel, are then welded to the single tube or the outer tube. The other end of the tube is sealed closed by welding on an end plate or by arc-heating and rolling the tube end, and the internal components of the suspension strut (such as those mentioned above) are inserted into the tube by way of the one end thereof, which is then sealed closed. The use of several welding steps has disadvantages in that welds are time consuming operations. Further, welds are susceptible to corrosion. Still further, the use of steel has disadvantages with regard to weight.

DE-U-1931028 discloses a method in accordance with the preamble of claim 1.

It is an object of the present invention to overcome one or more of the above mentioned disadvantages.

A method of forming a hydraulic damper in accordance with the present invention comprises extruding a tube of aluminium or aluminium alloy; forming a mounting means of aluminium or aluminium alloy; securing the mounting means to the extruded tube; and closing an end of the extruded tube by flame heating the end of the extruded tube and rolling the flame heated end.

This invention removes the steps of welding, thereby removing time consuming operations. Further the use of aluminium or aluminium alloy has advantages with regard to weight when compared to previously known arrangements.

The present invention will now be described, by way of example, with reference to the accompanying drawings, in which:-
Figure 1 is a cross-sectional view of a hydraulic damper in accordance with the present invention;
Figure 2 is a perspective view of the extruded mounting bracket of the hydraulic damper of Figure 1;
Figure 3 is a perspective view of the hydraulic damper of Figure 1 with a spring seat mounted thereon and the mounting bracket secured in position;
Figure 4 is a cross-sectional view of the extruded outer tube and the mounting bracket of the hydraulic damper of Figure 1 after securing the mounting bracket;
Figure 5 is a cross-sectional view of apparatus for forming beads in the extruded tube of the hydraulic damper of Figure 1;
Figure 6 is a partial cross-sectional view of a further alternative mounting means for the hydraulic damper of Figure 1;
Figure 7 is a cross-sectional view on the line VIII-VIII of Figure 6; and
Figure 8 is a partial cross-sectional view of a further alternative mounting means for the hydraulic damper of Figure 1.

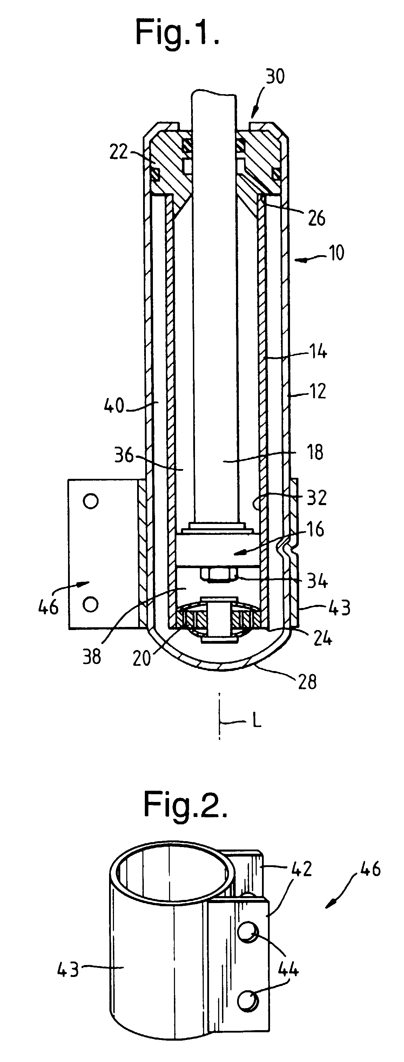

Referring to the drawings, the hydraulic damper 10 shown in Figure 1 is of the twin tube damper type, and comprises an outer tube 12, and an inner tube 14 substantially coaxial with the outer tube on an axis L. The outer tube 12, and preferably the inner tube 14, are formed from extruded aluminium or aluminium alloy and have a substantially constant cross-section along their length. The hydraulic damper 10 further comprises conventional components such as a piston assembly 16, a piston rod 18 having a longitudinal axis on axis L, a compensation valve 20, and a rod guide 22. The piston assembly 16 includes a compression valve and a rebound valve (not shown). The piston assembly 16, the compensation valve 20 and the rod guide 22 may be any suitable conventional design well known to those skilled in the art, and will not be described in detail. The inner tube 14 is substantially closed at one end 24 by the compensation valve 20, and is substantially closed at the other end 26 by the rod guide 22. The outer tube 12 is closed at one end 28 by flame heating and rolling the outer tube walls, and is substantially closed at the other end 30 (the open end) by the rod guide 22 and by spin closing the end 30 of the outer tube. An example of apparatus suitable for spin closing is disclosed in our GB patent application no. 9412806.3 (2290736 A), published after the priority date of the present application, in which a pair of rollers initially push a portion of the outer tube at the open end over at approximately 45°, and a second pair of rollers then push a section of the portion over at approximately 90°, whilst the outer tube is spinning about its longitudinal axis. The piston rod 18 extends through, and makes a sealing sliding fit with the rod guide 22. The piston assembly 16 makes a sealing sliding fit with the inner surface 32 of the inner tube 14. The piston rod 18 is secured to the piston assembly 16 by a nut 34 or any other suitable means. The piston assembly 16 divides the inner area of the inner tube 14 into a rebound chamber 36 and a compression chamber 38. The area between the inner tube 14 and the outer tube 12 defines a compensation chamber 40. The rebound and compression chambers 36 and 38 are substantially filled with fluid to damp reciprocating movement of the piston assembly 16 and piston rod 18 along axis L relative to the outer and inner tubes 12 and 14. The compensation chamber 40 is partly filled with fluid and acts as a reservoir for the fluid in the rebound and compression chambers 36 and 38. The hydraulic damper 10 is mounted in a motor vehicle (not shown) using mounting means in the form of a mounting bracket 46.

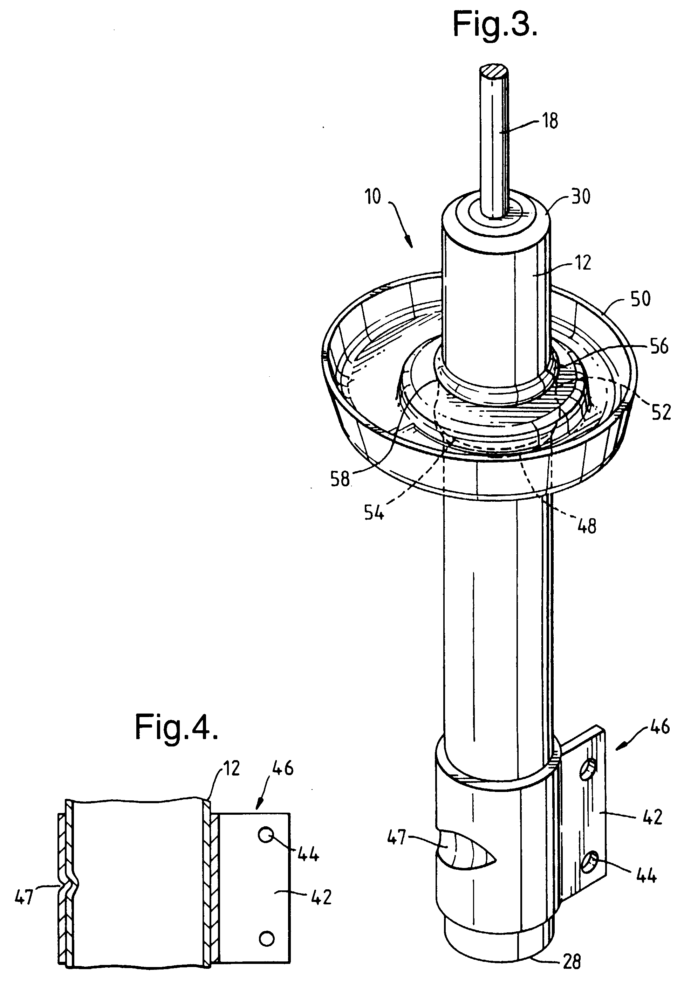

The mounting bracket 46 (Figure 2) is extruded from aluminium or aluminium alloy to integrally form a tubular portion 43 with a pair of spaced arms 42 which are substantially parallel. The tubular portion 43 has an internal diameter which is sized to make a close sliding fit on the outer tube 12. Pairs of holes 44 are cut in each arm 42 to form mounting apertures for the mounting bracket 46. The mounting bracket 46 is then slid into position on the outer tube 12, and is secured in place by pressing or punching a tangentially extending groove 47 in the tubular portion 43 and the outer tube 12 as shown in Figures 3 and 4. The groove 47 extends in a direction which is substantially at right angles to the axis L.

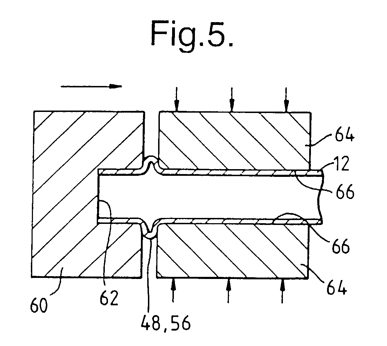

A spring seat 50 may be attached to the outer tube 12 as shown in Figure 3 as follows. A first external, circumferentially extending, bead 48 is formed in the outer tube 12. The spring seat 50 (of aluminium or aluminium alloy) is formed by pressing or casting and includes a cylindrical section 52 which has an internal shape and size which is substantially the same as the external shape and size of the outer tube 12 - that is, the cylindrical section can make a close sliding fit on the outer tube. The spring seat 50 is slid onto the outer tube 12, with the tube passing through the cylindrical section 52 until one end 54 of the cylindrical section rests on the first bead 48. A second external, circumferentially extending, bead 56 is then formed in the outer tube 12 adjacent the other end 58 of the cylindrical section 52 to secure the spring seat 50 on the outer tube. The external circumferentially extending beads 48,56 are preferably formed as shown in Figure 5 by positioning one end of the extruded tube 12 in a die 60 having a correspondingly shaped closed bore 62, and by positioning a pair of substantially identical dies 64 having substantially semi-circular grooves 66 therein around the extruded tube but slightly spaced from the die 60. The dies 64 are then moved towards one another to grip the extruded tube 12 and the die 60 moved towards the dies 64 to form the bead 48,56, the relative movement being indicated by the arrows in Figure 5.

As an alternative to this arrangement, the spring seat 50 may be secured by sliding the spring seat into position and then forming the two beads, or by forming two rings of external dimples rather than beads, or by rivets, or any other suitable alternative arrangement. Either prior to, or after, attachment of the spring seat 50, the one end 28 of the outer tube 12 is closed by flame heating the end of the outer tube, and then rolling over the end. Having formed the outer tube 12 with the mounting bracket 46 and the spring seat 50 secured thereto, and having closed the one end 28, the other components (as described above) of the hydraulic damper 10 can then be assembled therein.

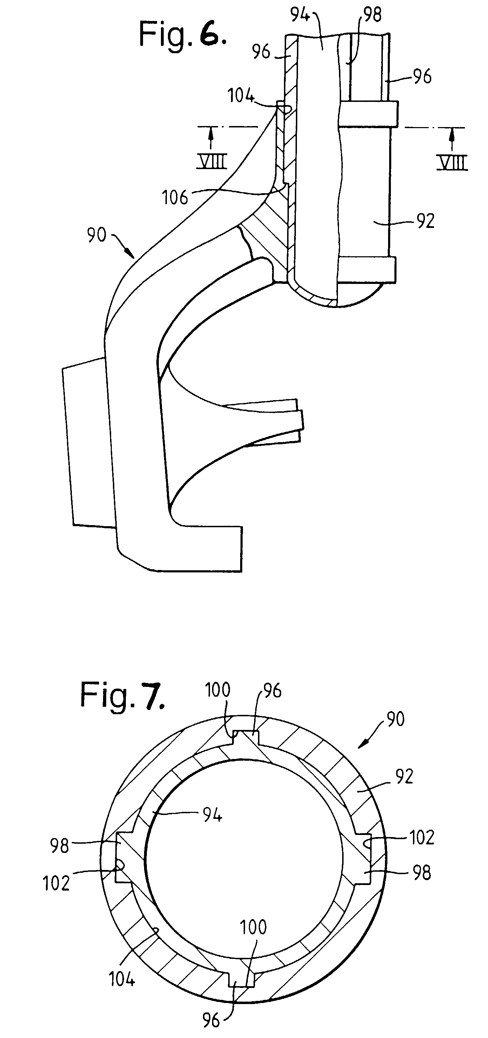

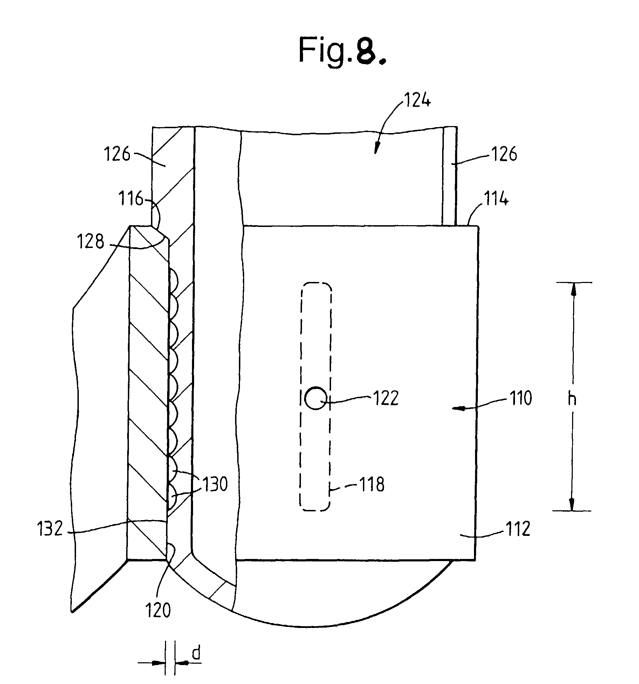

As an alternative to the use of the groove 47, the mounting bracket could be formed as shown in Figure 2, but with the tubular portion 43 having an internal diameter which is slightly smaller than the external diameter of the extruded tube 12. In this arrangement, the mounting bracket 46 is attached to the extruded tube by heating the mounting bracket to cause the tubular portion 43 to expand, sliding the mounting bracket into position on the extruded tube 12, and then cooling the mounting bracket such that the tubular portion contracts and frictionally grips the extruded tube. As a further alternative, the mounting bracket 46 may be attached by adhesive (in a similar manner to that described below with regard to Figure 8). In either of the above two described alternatives, the external surface of the extruded tube 12 may be formed with longitudinally extending ribs and the internal surface of the tubular portion 43 may be formed with corresponding grooves (or vice versa) to correctly aligned and/or position the mounting bracket 46 on the extruded tube - in a similar manner to that described below with regard to Figures 6 and 7. As a still further alternative the external surface of the extruded tube 12 and the internal surface of the tubular portion 43 may be provided with screw threads, and the mounting bracket 46 may be attached to the extruded tube by screw threading. In a still further alternative, the mounting bracket 46 may be secured in position between a pair of external circumferentially extending beads formed in the outer tube 12 as described above in relation to the fixing of the spring seat 50.

As shown in Figure 6, the mounting means is in the form of a steering knuckle 90 which is cast from aluminium or aluminium alloy. The steering knuckle 90 comprises a tubular portion 92 which is open at both ends, although one end may be closed to form an end cap for the extruded tube. In a preferred arrangement, the extruded tube 94 is formed with two pairs of external, longitudinally (axially) extending, outwardly directed, ribs 96,98, (Figure 7) with the ribs of each pair being diametrically opposed, and the pairs being set at right angles to one another. The ribs 96,98 of each pair have substantially the same cross-sectional shape and area, but different from the cross-sectional shape and area of the other pair of ribs. The tubular portion 92 of the steering knuckle 90 has correspondingly shaped and sized grooves 100,102 formed in its internal surface 104. This arrangement allows the steering knuckle 90 to make a close sliding fit with the extruded tube 94, and also provide means for correctly locating the steering knuckle relative to the extruded tube. A part of one or more of the ribs 96,98 may be removed and a part of the corresponding groove or grooves 100,102 may be omitted to provide one or more pairs of engaging shoulders 106 which act as a stop to again correctly locate the steering knuckle 90 on the extruded tube 94. The steering knuckle 90 may be attached to the extruded tube 94 by frictional grip, by heating the tubular portion 92, positioning the tubular portion on the extruded tube, and then cooling the tubular portion. Without the presence of the ribs 96,98 and the grooves 100,102, the steering knuckle may be attached to the extruded tube by screw threading. Preferably, however, the steering knuckle 90 is attached to the extruded tube 94 by adhesive, with or without the presence of the ribs 96,98 and grooves 100,102, as described below with reference to Figure 8.

In the alternative arrangement shown in Figure 8, a steering knuckle 110 has a tubular portion 112 cast from aluminium or aluminium alloy. One end 114 of the tubular portion 112 is formed with a tapered surface 116. Two longitudinally (axially) extending grooves 118 are formed in the inner surface 120 of the tubular portion 112, the grooves being substantially diametrically opposed and of predetermined height h. A hole 122 is cut through the tubular portion 112 to open into each groove 118. The extruded tube 124 of aluminium or aluminium alloy has a pair of external longitudinally extending ribs 126 which are cut to form a tapered end 128. The tapered end 128 and the tapered surface 116 on the tubular portion 112 define shoulders which engage to provide a stop for locating the steering knuckle 110 on the extruded tube 124. A number of circumferentially extending grooves 130 are cut in the outer surface 132 of the extruded tube 124 adjacent the tapered end 128 over a predetermined height which is substantially the same as the height h of the grooves 118 in the tubular portion 112. The grooves 130 have a predetermined depth d. The steering knuckle 110 is secured in position by injecting a suitable adhesive, under pressure, into one of the holes 122 in the tubular portion 112 and along the corresponding groove 118. The pressure forces the adhesive to travel around and fill the grooves 130, pass into the opposite groove 118, and then extrude out through the corresponding hole 122. The depth d of the grooves 130 is determined to provide the necessary working properties (strength) for the adhesive. As an alternative to the grooves 130, any other suitable means for providing a space between the inner surface of the tubular portion and the outer surface of the extrude tube may be used to provide the required working depth for the adhesive.

The other end 30 of the extruded tube 12 may be closed by a threaded cap as an alternative arrangement to spin closing.

Whilst the above described embodiments refer to the twin tube type of hydraulic damper, it will be appreciated that at least some of these arrangements are also applicable to hydraulic dampers of the monotube type in which the sole tube of the damper is formed from extruded aluminium or aluminium alloy and has an aluminium or aluminium alloy mounting means attached thereto.

Preferably the extruded tube and the mounting means are formed from aluminium alloy conforming to BS 6082 and which comprises, by weight percentage, 0.70 to 1.3% Si, 0.5% Fe, 0.1% Cu, 0.4 to 1.0% Mn, 0.6 to 1.2% Mg, 0.25% Cr, 0.2% Zn, 0.1% Ti, 0.05 to 0.15% impurities, with the remainder being aluminium. Other compositions of aluminium alloy may be used.

All of the above described arrangements have advantages in terms of easier manufacture and assembly, and of providing a hydraulic damper of reduced weight compared to previously known arrangements.

## Claims

1. A method of forming a hydraulic damper comprising extruding a tube (12) of aluminium or aluminium alloy; forming a mounting means (46) of aluminium or aluminium alloy; and securing the mounting means to the extruded tube; characterised by closing an end (28) of the extruded tube by flame heating the end of the extruded tube and rolling the flame heated end.

2. A method as claimed in Claim 1, wherein the mounting means (46) is formed by extrusion.

3. A method as claimed in Claim 1, wherein the mounting means (90) is formed by casting.

4. A method as claimed in any one of Claims 1 to 3, wherein the mounting means (46) is formed with a tubular portion (43) which overlies and is secured to a portion of the extruded tube (12).

5. A method as claimed in Claim 4, wherein the mounting means (46) is secured to the extruded tube (12) by punching or pressing a tangentially extending groove (47) in the tubular portion (43) and the extruded tube.

6. A method as claimed in Claim 4, wherein the mounting means (90) is secured to the extruded tube (12) by heating the tubular portion (92), placing the tubular portion in the required position on the extruded tube, and cooling the tubular portion to form a frictional grip between the tubular portion and the extruded tube.

7. A method as claimed in Claim 4, wherein the mounting means (70) is secured to the extruded tube (12) by forming a screw thread (74,78) on the extruded tube and in the tubular portion (76) and screw threading the tubular portion to the extruded tube.

8. A method as claimed in Claim 4, wherein the mounting means (110) is secured to the extruded tube (124) by applying adhesive between the tubular portion (112) and the extruded tube.

9. A method as claimed in Claim 8, comprising forming a number of circumferentially extending grooves (130) of predetermined depth in the extruded tube (124) and inserting the adhesive in the grooves.

10. A method as claimed in Claim 9, comprising forming two axially extending grooves (118) in the inner surface of the tubular portion (112) and forming a through hole (122) connecting with each groove, wherein the adhesive is inserted through one hole and one axial groove into the circumferential grooves (130) in the extruded tube.

11. A method as claimed in Claim 4, wherein the mounting means is secured to the extruded tube by forming an external circumferentially extending bead in the extruded tube, sliding the tubular portion onto the extruded tube and into engagement with the bead, and forming a second external circumferentially extending bead in the extruded tube to trap the tubular portion between the two beads.

12. A method as claimed in any one of Claims 1 to 11, wherein the mounting means (46) is formed to define a mounting bracket having at least one arm (42) for securing the mounting bracket to a motor vehicle.

13. A method as claimed in any one of Claims 1 to 11, wherein the mounting means is formed as a steering knuckle (90).

14. A method as claimed in any one of Claims 1 to 13, wherein the extruded tube (94) has one or more external longitudinally extending ribs (96,98) which engage with corresponding grooves (100,102) formed in the mounting means (90) to locate the mounting means on the extruded tube in a predetermined position.

## Patentansprüche

1. Verfahren zum Herstellen eines hydraulischen Dämpfers, das umfaßt, daß ein Rohr (12) aus Aluminium oder einer Aluminiumlegierung extrudiert wird, daß ein Montagemittel (46) aus Aluminium oder einer Aluminiumlegierung hergestellt wird und daß das Montagemittel an dem extrudierten Rohr befestigt wird, dadurch gekennzeichnet, daß ein Ende (28) des extrudierten Rohres durch Flammenerwärmen des Endes des extrudierten Rohres und Walzen des flammenerwärmten Endes verschlossen wird.

2. Verfahren nach Anspruch 1, wobei das Montagemittel (46) durch Extrusion hergestellt wird.

3. Verfahren nach Anspruch 1, wobei das Montagemittel (90) durch Gießen hergestellt wird.

4. Verfahren nach einem der Ansprüche 1 bis 3, wobei an dem Montagemittel (46) ein rohrförmiger Teil (43) hergestellt wird, der über einem Teil des extrudierten Rohres (12) liegt und an diesem befestigt wird.

5. Verfahren nach Anspruch 4, wobei das Montagemittel (46) an dem extrudierten Rohr (12) befestigt wird, indem eine sich tangential erstreckende Nut (47) in das rohrförmige Teil (43) und das extrudierte Rohr gestanzt oder gepreßt wird.

6. Verfahren nach Anspruch 4, wobei das Montagemittel (90) an dem extrudierten Rohr (12) befestigt wird, indem der rohrförmige Teil (92) erwärmt wird, der rohrförmige Teil in der erforderlichen Position an dem extrudierten Rohr angeordnet wird und der rohrförmige Teil abgekühlt wird, um einen Reibgriff zwischen dem rohrförmigen Teil und dem extrudierten Rohr herzustellen.

7. Verfahren nach Anspruch 4, wobei das Montagemittel (70) an dem extrudierten Rohr (12) befestigt wird, indem ein Schraubengewinde (74, 78) an dem extrudierten Rohr und in dem rohrförmigen Teil (76) hergestellt wird und der rohrförmige Teil auf das extrudierte Rohr geschraubt wird.

8. Verfahren nach Anspruch 4, wobei das Montagemittel (110) an dem extrudierten Rohr (124) befestigt wird, indem ein Haftmittel zwischen dem rohrförmigen Teil (112) und dem extrudierten Rohr aufgebracht wird.

9. Verfahren nach Anspruch 8, das umfaßt, daß eine Anzahl sich in Umfangsrichtung erstreckende Nuten (130) mit vorbestimmter Tiefe in dem extrudierten Rohr (124) hergestellt wird und daß das Haftmittel in die Nuten eingeführt wird.

10. Verfahren nach Anspruch 9, das umfaßt, daß zwei sich axial erstreckende Nuten (118) in der Innenfläche des rohrförmigen Teils (112) hergestellt werden und daß ein Durchgangsloch (122) hergestellt wird, das sich mit jeder Nut verbindet, wobei das Haftmittel durch ein Loch und eine axiale Nut in die Umfangsnuten (130) in dem extrudierten Rohr eingeführt wird.

11. Verfahren nach Anspruch 4, wobei das Montagemittel an dem extrudierten Rohr befestigt wird, indem ein äußerer, sich in Umfangsrichtung erstreckender Wulst in dem extrudierten Rohr hergestellt wird, der rohrförmige Teil auf das extrudierte Rohr und in Eingriff mit dem Wulst geschoben wird und ein zweiter äußerer, sich in Umfangsrichtung erstreckender Wulst in dem extrudierten Rohr hergestellt wird, um den rohrförmigen Teil zwischen den beiden Wülsten einzuschließen.

12. Verfahren nach einem der Ansprüche 1 bis 11, wobei das Montagemittel (46) so hergestellt wird, daß es einen Montageträger festlegt, der mindestens einen Arm (42) aufweist, um den Montageträger an einem Kraftfahrzeug zu befestigen.

13. Verfahren nach einem der Ansprüche 1 bis 11, wobei das Montagemittel als ein Achsschenkel (90) hergestellt wird.

14. Verfahren nach einem der Ansprüche 1 bis 13, wobei das extrudierte Rohr (94) eine oder mehrere äußere, sich in Längsrichtung erstreckende Rippen (96, 98) aufweist, die mit entsprechenden Nuten (100, 102) in Eingriff stehen, die in dem Montagemittel (90) hergestellt sind, um das Montagemittel an dem extrudierten Rohr in einer vorbestimmten Position anzuordnen.

## Revendications

1. Procédé de fabrication d'un amortisseur hydraulique comprenant les étapes qui consistent à extruder un tube (12) en aluminium ou en alliage d'aluminium ; fabriquer un moyen de fixation (46) en aluminium ou en alliage d'aluminium ; et assujettir le moyen de fixation sur le tube extrudé ; caractérisé par le fait de fermer une extrémité (28) du tube extrudé par chauffage à la flamme de l'extrémité du tube extrudé puis laminage de l'extrémité chauffée à la flamme.

2. Procédé selon la revendication 1, dans lequel le moyen de fixation (46) est fabriqué par extrusion.

3. Procédé selon la revendication 1, dans lequel le moyen de fixation (90) est fabriqué par moulage.

4. Procédé selon l'une quelconque des revendications 1 à 3, dans lequel le moyen de fixation (46) est muni d'une partie tubulaire (43) qui chevauche une partie du tube extrudé (12) et y est assujettie.

5. Procédé selon la revendication 4, dans lequel le moyen de fixation (46) est assujetti au tube extrudé (12) par poinçonnage ou pressage, dans la partie tubulaire (43) et le tube extrudé, d'une gorge (47) s'étendant dans la direction tangentielle.

6. Procédé selon la revendication 4, dans lequel le moyen de fixation (90) est assujetti au tube extrudé (12) par chauffage de la partie tubulaire (92), mise en place de la partie tubulaire dans la position requise sur le tube extrudé, puis refroidissement de la partie tubulaire, pour former une adhérence par frottement entre la partie tubulaire et le tube extrudé.

7. Procédé selon la revendication 4, dans lequel le moyen de fixation (70) est assujetti au tube extrudé (12) grâce au fait de former un filetage (74, 78) sur le tube extrudé et sur la partie tubulaire (76), et de visser la partie tubulaire sur le tube extrudé.

8. Procédé selon la revendication 4, dans lequel le moyen de fixation (110) est assujetti au tube extrudé (124) par application d'un adhésif entre la partie tubulaire (112) et le tube extrudé.

9. Procédé selon la revendication 8, comprenant l'étape qui consiste à former, dans le tube extrudé (124), un certain nombre de gorges (130) s'étendant dans la direction circonférentielle et ayant une profondeur prédéterminée, et à insérer l'adhésif dans les gorges.

10. Procédé selon la revendication 9, comprenant l'étape qui consiste à former, dans la surface intérieure de la partie tubulaire (112), deux gorges (118) s'étendant dans la direction axiale et à former un trou débouchant (122) relié à chaque gorge, l'adhésif étant inséré dans un trou et une gorge axiale, et pénétrant dans les gorges circonférentielles (130) aménagées dans le tube extrudé.

11. Procédé selon la revendication 4, dans lequel le moyen de fixation est assujetti au tube extrudé grâce au fait de former, dans le tube extrudé, un bourrelet extérieur s'étendant dans la direction circonférentielle, de glisser la partie tubulaire sur le tube extrudé et en prise avec le bourrelet, et de former, dans le tube extrudé, un deuxième bourrelet extérieur s'étendant dans la direction circonférentielle, pour emprisonner la partie tubulaire entre les deux bourrelets.

12. Procédé selon l'une quelconque des revendications 1 à 11, dans lequel le moyen de fixation (46) est formé de façon à définir une cornière de fixation ayant au moins un bras (42) servant à assujettir la cornière de fixation au véhicule à moteur.

13. Procédé selon l'une quelconque des revendications 1 à 11, dans lequel le moyen de fixation se présente sous la forme d'une fusée d'essieu (90).

14. Procédé selon l'une quelconque des revendications 1 à 13, dans lequel le tube extrudé (94) possède une ou plusieurs nervures (96, 98) s'étendant dans la direction longitudinale et entrant en prise avec des gorges correspondantes (100, 102) formées dans le moyen de fixation (90), pour positionner le moyen de fixation dans une position prédéterminée sur le tube extrudé.
